# EUROPÄISCHE PATENTSCHRIFT

(11) **EP 1 069 356 B1**
(45) Veröffentlichungstag und Bekanntmachung des Hinweises auf die Patenterteilung: **06.08.2003**
(21) Anmeldenummer: 00122375.9
(22) Anmeldetag: 02.02.1995
(51) Int. Cl.: F16K 27/00

(54) **Modulares Ventil- und Verteilersystem für strömende Medien**
Modular valve and delivery system for fluids
Soupape et système d'alimentation modulaires pour fluides

(30) Priorität: 08.02.1994 DE 9402093 U
(43) Veröffentlichungstag der Anmeldung: 17.01.2001
(62) Teilanmeldung aus: 95101412.5
(73) Patentinhaber: Bürkert Werke GmbH & Co., D-74653 Ingelfingen (DE)
(72) Erfinder: Barthel, Klaus, 99427 Weimar (DE); Dettmann, Heinrich, 74676 Niedernhall (DE); Müller, Bernhard, 99428 Weimar/Tröbsdorf (DE); Pieloth, Manfred, 01069 Dresden (DE); Schrepel, Dieter, Dr., 01468 Friedewald (DE); Töpfer, Heinz, Prof. Dr., 01277 Dresden (DE)
(74) Vertreter: Degwert, Hartmut, Dipl.-Phys.

(56) Entgegenhaltungen:
- US-A- 2 812 154
- US-A- 2 834 368
- US-A- 3 754 565
- US-A- 4 080 983
- US-A- 4 934 411

## Beschreibung

Die Erfindung betrifft ein modulares Ventil- und Verteilersystem für strömende Medien gemäß dem Oberbegriff des Anspruchs 1. Ein solches System ist beispielsweise aus der US-A-2 834 368 bekannt.

Zum kompakten Aufbau von Ventilgruppen ist es bereits bekannt, einzelne Ventile auf einer gemeinsamen Montageplatte zu befestigen, in der auch das Medium durch Kanäle und Bohrungen zu den Ventilen und von diesen fort geführt wird. Ferner ist es bekannt, die einzelnen Ventile mit Gehäusen auszustatten, die direkt aneinandergereiht werden können. Es besteht aber ein Bedarf nach einem modularen Ventil- und Verteilersystem, das mit wenigen elementaren Grund- und Funktionsteilen ein breites Spektrum von Funktionen abdeckt, insbesondere das Sammeln, Schalten, Verteilen, Regeln und Umsteuern von Fluidströmen. Ein besonderes Anwendungsgebiet für ein solches System sind Klima- und Heizanlagen.

Das erfindungsgemäße modulare Ventil- und Verteilersystem für strömende Medien erfüllt dieses Bedürfnis. Gemäß der Erfindung ist ein modulares Ventil- und Verteilersystem mit den kennzeichnenden Merkmalen des Anspruchs 1 vorgesehen.

Auf diese Weise wird ein Rückschlagventil bereitgestellt.

Die quaderförmigen Grundgehäuse können in zwei aufeinander senkrechten Richtungen aneinandergereiht werden. Jede Komponente des Systems wird durch Ausrüsten des Grundgehäuses mit den benötigten Funktionsteilen bereitgestellt. Mit einem begrenzten Umfang von Funktionsteilen können so alle wesentlichen Sammel-, Schalt-, Verteil-, Regel- und Umsteueraufgaben erfüllt werden.

Als Funktionsteile kommen in erster Linie Dichtsitze, die in die Öffnungen der Seitenflächen des Grundgehäuses einsetzbar sind, und Schließkörper in Betracht, die mit diesen Dichtsitzen zusammenwirken. Auf diese Weise können neben Rückschlagventilen auch Zweiwegeventile mit variabler Drosselung des Durchflusses oder, bei kugelförmiger Ausbildung des Schließkörpers, Dreiwegeventile verwirklicht werden, die das Medium auf zwei Ausgänge verteilen.

Bei einer bevorzugten Ausführungsform des Systems hat der Grundkörper einen geschlossenen Boden und eine offene Oberseite, die durch einen Deckel verschließbar ist. Im einfachsten Falle eines Strömungsverteilers oder Rückschlagventils ist der Deckel geschlossen. Wenn Funktionselemente im Inneren des Grundgehäuses betätigt werden müssen, ist vorzugsweise in einer Durchgangsöffnung des Deckels eine Welle drehbar gelagert, die in den Innenraum des Grundkörpers hineinragt und ein Funktionsteil der betreffenden Komponente des Systems trägt. Die Welle ragt mit einem Anschlußstück aus dem Deckel nach außen heraus. Auf dem Deckel können nun die für die jeweilige Funktion der Komponente benötigten Baugruppen aufgesetzt werden, beispielsweise ein Stellungsmeldermodul, ein Motor-Antriebsmodul und/oder ein Handantriebsmodul.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine schematische Draufsicht im Schnitt durch vier verschiedene Komponenten des Systems;
Fig. 2 eine schematische Seitenansicht im Schnitt bei einem Zweiwegeventil; und
Fig. 3 bis 7 schematisch verschiedene Kombinationsmöglichkeiten innerhalb des Systems.

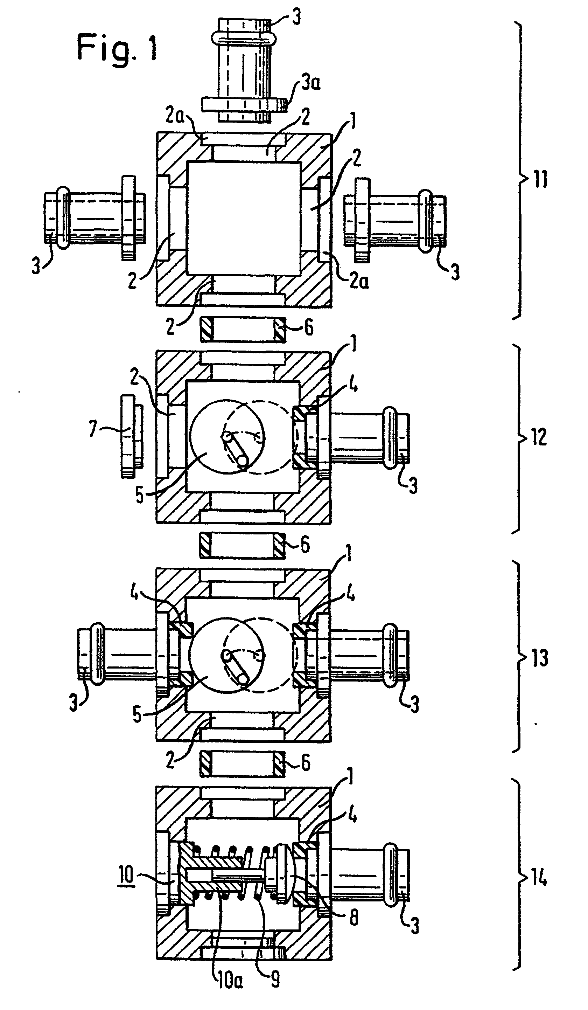

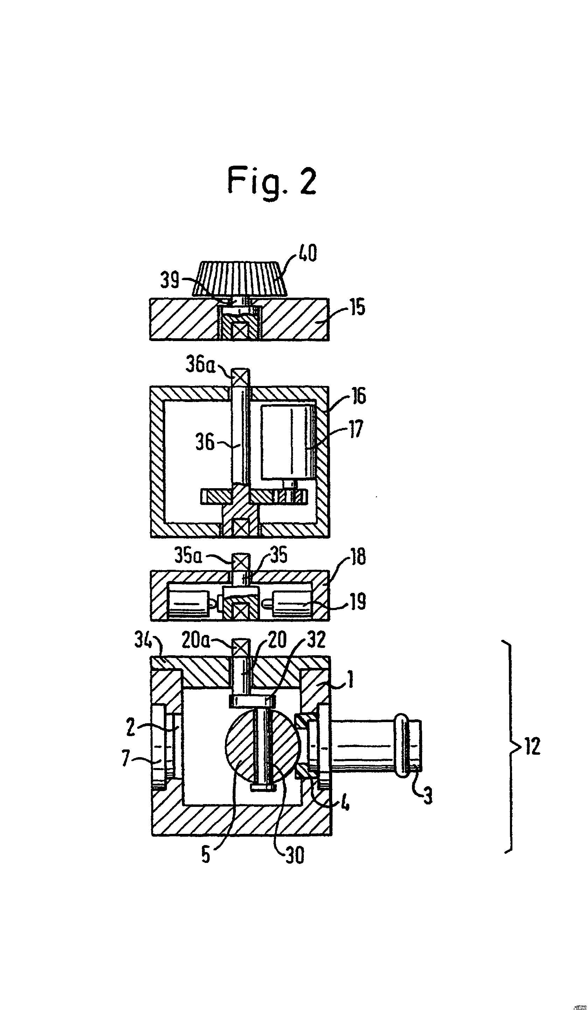

Die in Fig. 1 gezeigten vier Komponenten des Systems sind jeweils mit einem quaderförmigen, im Grundriß quadratischen Grundgehäuse 1 versehen. Das Grundgehäuse 1 ist in seinen paarweise einander gegenüberliegenden Seitenflächen mit gleichgestalteten Öffnungen 2 versehen. Jede Öffnung 2 ist an der Außenseite des Grundkörpers 1 durch eine Stufe 2a erweitert. Der Grundkörper 1 besitzt einen geschlossenen Boden und eine offene Oberseite. Die offene Oberseite des Grundgehäuses 1 wird durch einen Deckel 34 (Fig. 2) verschlossen.

Mit 11 ist in Fig. 1 ein Strömungssammler oder -verteiler bezeichnet. Bei dieser Ausführung einer Komponente des Systems wird an drei der vier Öffnungen 2 des Grundgehäuses 1 jeweils ein Schlauchanschluß 3 eingesetzt. Jeder Schlauchanschluß 3 besitzt einen Flansch 3a, der in den erweiterten Teil 2a der Öffnung 2 paßt und dort abgedichtet, beispielsweise dicht eingeklebt, ist. Der hohle Innenraum des Grundgehäuses 1 bildet eine Sammel- und Verteilerkammer. Die vierte Öffnung 2 des Grundgehäuses 1 dient zur Kopplung mit dem Grundgehäuse 1 eines in Figur 1 mit 12 bezeichneten Zweiwegeventils. Die Grundgehäuse der mit 11 und 12 bezeichneten Komponenten werden unter Zwischenfügung eines Dichtrings 6, der in den erweiterten Teil der korrespondierenden Öffnungen 2 beider Grundgehäuse eingesetzt ist, aneinandergefügt. Das Zweiwegeventil 12 kommt dadurch zustande, daß in eine der Öffnungen 2, die unter 90° zu den miteinander kommunizierenden Öffnungen 2 der Komponenten 11 und 12 orientiert ist, innenseitig ein Dichtsitz 4 eingesetzt ist, mit dem ein kugelförmiger Schließkörper 5 zusammenwirkt. Der kugelförmige Schließkörper 5 ist, wie aus Figur 2 ersichtlich, mittels eines Lagerzapfens 30 drehbar an einem Kurbelarm 32 gelagert, der an eine drehbar im Deckel 34 gelagerte Welle 20 angeschlossen ist. Durch Drehung der Welle 20 wird der Schließkörper 5 gegen den Dichtsitz 4 und von diesem fort bewegt, um den Durchfluß zu dem in die betreffende Öffnung eingesetzten Schlauchanschluß 3 mehr oder weniger stark zu drosseln bzw. abzusperren. Die dem Dichtsitz 4 gegenüberliegende Öffnung 2 des Grundgehäuses 1 ist durch einen Blinddeckel 7 verschlossen.

Auf seiner von der Komponente 11 abgewandten Seite ist das Zweiwegeventil 12 in gleicher Weise unter Zwischenfügung eines Dichtrings 6 an eine weitere Komponente 13 angeschlossen, bei der es sich um ein Dreiwegeventil handelt. Das Dreiwegeventil 13 unterscheidet sich von dem Zweiwegeventil 12 nur dadurch, daß zwei Dichtsitze 4 in zwei einander gegenüberliegende Öffnungen 2 eingesetzt sind und der Blinddeckel 7 durch einen weiteren Schlauchanschluß 3 ersetzt ist. Durch Drehung der Welle 20 wird der Schließkörper 5 zwischen den beiden Dichtsitzen 4 verlagert.

Als weitere Komponente 14 ist ein Rückschlagventil unter Zwischenfügung eines Dichtrings 6 an die verbleibende Öffnung 2 des Dreiwegeventils 13 angekoppelt. Dieses Rückschlagventil kommt dadurch zustande, daß in eine dem Dichtsitz 4 gegenüberliegende Öffnung des Grundgehäuses 1 ein Einsatzteil 10 eingesetzt ist, das durch einen Blinddeckel und einen daran angeschlossenen, in den Innenraum des Grundkörpers ragenden Träger 10a gebildet ist. An diesem Träger 10a ist ein Ventil-Schließkörper 8 gleitverschiebbar gelagert. Zwischen dem Einsatzteil 10 und dem Ventil-Schließkörper 8 ist eine Druckfeder 9 abgestützt, die den Ventil-Schließkörper gegen den Dichtsitz 4 beaufschlagt. Der Ventil-Schließkörper 8 steht ferner unter der Wirkung der Mediendrücke im Innenraum des Grundgehäuses 1 bzw. in dem an den Dichtsitz 4 anschließenden Schlauchanschluß 3. Wenn der Mediendruck im Inneren dieses Schlauchanschlusses 3 überwiegt, wird der Ventil-Schließkörper 8 von dem Dichtsitz 4 abgehoben.

Bei dem in Figur 2 gezeigten Zweiwegeventil 12 ist das aus dem Deckel 34 nach außen herausragende Ende der Welle 20 als Vierkant-Anschlußstück 20a ausgebildet. Eine erste, auf den Deckel 34 aufgesetzte Baugruppe ist durch einen Stellungsmeldermodul 18 gebildet. Dieser Stellungsmeldermodul 18 etnhält einen Wellenabschnitt 35, der auf seiner dem Zweiwegeventil 12 zugewandten Seite eine Kupplungsmuffe zur formschlüssigen Verbindung mit dem Anschlußstück 20a und auf seiner gegenüberliegenden Seite ein aus dem Stellungsmeldermodul 18 herausragendes Anschlußstück 35a aufweist, das mit dem Anschlußstück 20a übereinstimmt. Der Stellungsmeldermodul 18 enthält einen oder mehrere Endlagenschalter 19; zusätzlich oder alternativ kann er mit einem Potentiometer ausgestattet sein.

Auf den Stellungsmeldermodul 18 kann eine weitere Baugruppe 16 aufgesetzt werden, bei der es sich um einen Motor-Antriebsmodul handelt. Auch dieser Modul enthält einen Wellenabschnitt 36 mit einer Kupplungsmuffe an seinem einen und einem Anschlußstück 36a an seinem anderen Ende. Im Inneren des Antriebsmoduls 16 ist ein Antriebsmotor 17 über ein Getriebe an den Wellenabschnitt 36 angeschlossen.

Schließlich ist auf dem Motor-Antriebsmodul 16 als weitere Baugruppe ein Handantriebsmodul 15 augesetzt. Dieser besteht im wesentlichen aus einem Deckel, einem darin drehbar gelagerten Wellenabschnitt 39, der mittels einer Kupplungsmuffe mit dem Anschlußstück 36a des Moduls 16 formschlüssig verbindbar ist, und einem Handrad 40 am anderen Ende des Wellenabschnitts 39.

Wie aus Figur 2 ohne weiteres ersichtlich ist, können die Wellenabschnitte 35, 36 und 39 koaxial miteinander und mit der Welle 20 formschlüssig verbunden werden, indem die Baugruppen einfach aufeinandergesetzt werden. Jeder Modul 15, 16, 18 wird bedarfsweise verwendet; beispielsweise kann der Handantriebsmodul 15 auch unmittelbar auf den Deckel 34 aufgesetzt werden.

Wenn anstelle des Blinddeckels 7 in die betreffende Öffnung 2 des Grundgehäuses 1 ein weiterer Dichtsitz 4 eingesetzt wird, entsteht statt eines Zweiwegeventils ein Dreiwegeventil, wie die in Figur 1 mit 13 bezeichnete Komponente.

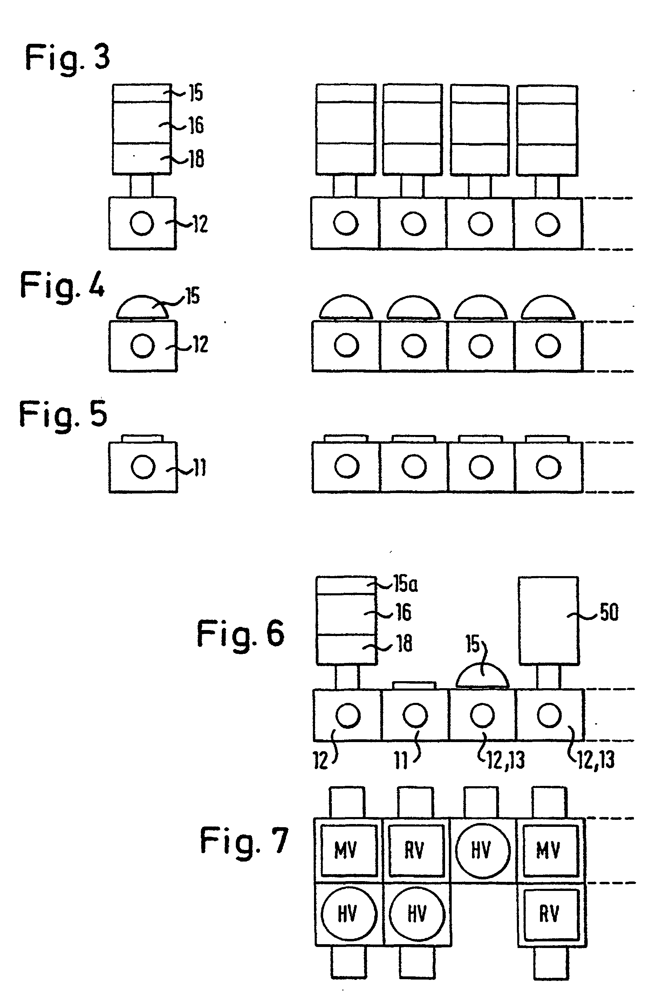

Die Skizzen der Figur 3 bis 7 zeigen beispielshalber die verschiedenen Kombinationsmöglichkeiten innerhalb des modularen Ventil- und Verteilersystems.

In Figur 3 ist zunächst ein einzelnes Ventil 12 (oder 13) mit einem Stellungsmeldermodul 18, einem Motor-Antriebsmodul 16 und einem weiteren Modul gezeigt, bei dem es sich um einen Handantriebsmodul 15 oder aber um einen elektronischen Steuermodul handeln kann. Daneben ist in Figur 3 eine Anordnung von vier dieser Ventile im aneinandergereihten Zustand gezeigt.

Figur 4 zeigt ein einzelnes Ventil 12 (oder 13) lediglich mit einem Handantriebsmodul 15; daneben sind vier dieser Ventile 12 aneinandergereiht dargestellt.

In Figur 5 ist ein Verteilermodul 11 und daneben eine Anordnung von vier aneinandergereihten Komponenten dieses Typs gezeigt.

Figur 6 zeigt die Aneinanderreihung von Komponenten verschiedenen Typs, nämlich ein Zweiwegeventil 12 mit einem Stellungsmeldermodul 18, Motor-Antriebsmodul 16 und einem Steuermodul 15a, ferner ein Verteiler 11, ein weiteres Ventil 12, 13 mit Handantriebsmodul 15 und schließlich ein Ventil 12 oder 13, das mit einem beliebigen Modul 50 kombiniert ist.

Wie aus Figur 7 ersichtlich ist, können die verschiedenen Komponenten in zwei zueinander senkrechten Richtungen aneinandergefügt werden, wodurch komplexe Ventil- und Verteilergruppen entstehen, zumal bei dieser zweidimensionalen Aneinanderreihung keine Einschränkungen bezüglich des Typs der darin verwendeten Komponenten bestehen.

## Patentansprüche

1. Modulares Ventil- und Verteilersystem für strömende Medien, aus mehreren aneinanderfügbaren Komponenten (11, 12, 13, 14), bei dem alle Komponenten (11, 12, 13, 14) ein gleiches quaderförmiges Grundgehäuse (1) aufweisen, das in paarweise einander gegenüberliegenden Seitenflächen mit gleichgestalteten Öffnungen (2) versehen ist, bei jeweils zwei aneinandergefügten Grundgehäusen (1) ihre Innenräume durch korrespondierende Öffnungen (2) in den Seitenflächen miteinander in Verbindung stehen, die Öffnungen (2) in den Seitenflächen bedarfsweise durch Blinddeckel (7) verschließbar oder als Anschlußöffnung verwendbar sind, und die Grundgehäuse (1) bedarfsweise mit Funktionsteilen (4, 5, 8) der Komponenten ausrüstbar sind, wobei an einem in eine Öffnung (2) eingesetzten Einsatzteil (10) ein in den Innenraum des Grundgehäuses (1) ragender Träger (10a) für ein Funktionsteil (8) der betreffenden Komponente (14) befestigt ist, **dadurch gekennzeichnet, daß** an dem Träger (10a) ein federbelasteter Ventil-Schließkörper (8) entlang der gemeinsamen Achse zweier einander gegenüberliegender Öffnungen (2) der Seitenflächen des Grundgehäuses (1) verschiebbar gelagert ist und der Ventil-Schließkörper (8) mit einem in die gegenüberliegende Öffnung (2) eingesetzten Dichtsitz (4) zusammenwirkt.

2. System nach Anspruch 1, **dadurch gekennzeichnet, daß** das Grundgehäuse (1) einen quadratischen Grundriß aufweist und mehrere Grundgehäuse (1) in zwei zueinander senkrechten Richtungen anreihbar sind.

3. System nach einem der vorstehenden Ansprüche, **dadurch gekennzeichnet, daß** das Grundgehäuse (1) einen geschlossenen Boden und eine offene Oberseite aufweist, die durch einen Deckel (34) verschließbar ist.

4. System nach Anspruch 3, **dadurch gekennzeichnet, daß** in einer Durchgangsöffnung des Deckels (34) eine Welle (20) drehbar gelagert ist, die in den Innenraum des Grundgehäuses (1) hineinragt und ein Funktionsteil (5) der betreffenden Komponente trägt, und daß die Welle (20) mit einem Anschlußstück (20a) aus dem Deckel (34) nach außen herausragt.

5. System nach Anspruch 4, **dadurch gekennzeichnet, daß** auf den Deckel (34) bedarfsweise und in form- oder kraftschlüssiger Verbindung mit dem Anschlußstück (20a) aufsetzbar sind:
- ein Stellungsmeldermodul (18),
- ein Motor-Antriebsmodut (16),
- ein Handantriebsmodul (15),
- ein Steuermodul (15a);
wobei jeder Modul einen drehbaren Wellenabschnitt (35, 36, 39) aufweist und alle Moduln (18, 16, 15) durch koaxiales Zusammenstecken ihrer Wellenabschnitte auch miteinander form- oder kraflschlüssig verbindbar sind.

6. System nach Anspruch 4 oder 5, **dadurch gekennzeichnet, daß** das Funktionsteil der Komponente (12, 13) ein kugelförmiger Schließkörper (5) ist, der an einem mit der Welle (20) verbundenen Kurbelarm (32) gelagert ist und mit wenigstens einem in eine der Öffnungen (2) der Seitenflächen eingesetzten Dichtsitz (4) zusammenwirkt.

7. System nach einem der vorstehenden Ansprüche, **dadurch gekennzeichnet, daß** die Öffnungen (2) an der Außenseite des Grundgehäuses (1) zur Aufnahme eines Dichtrings (6) erweitert sind.

## Claims

1. A modular valve and distributor system for flowing media, constructed of several components (11, 12, 13, 14) which can be fitted together, in which all the components (11, 12, 13, 14) have an identical right parallelepipedal basic housing (1) which has lateral surfaces located opposite each other in pairs with identical openings (2), and in which, where any two basic housings (1) are fitted together, their interiors communicate through corresponding openings (2) in their lateral surfaces, the openings (2) in the lateral surfaces being adapted to be sealed with blind covers (7) or used as connection openings as required, and the basic housings (1) being adapted to be fitted with functional elements (4, 5, 8) of the components as required, a carrier (10a) for a functional element (8) of the respective component (14) being secured to an insertion piece (10) inserted in an opening (2), the carrier (10a) protruding into the interior of the basic housing (1), **characterized in that** a spring-loaded valve closing body (8) is mounted on the carrier (10a) for displacement along the common axis of two openings (2) located opposite each other in the lateral surfaces of the basic housing (1) and the valve closing body (8) cooperates with a sealing seat (4) inserted in the opposite opening (2).

2. The system according to claim 1, **characterized in that** the basic housing (1) has a square base and that several basic housings (1) can be fitted together in two dimensions at right angles to each other.

3. The system according to either of the preceding claims, **characterized in that** the basic housing (1) has a closed bottom and an open top which can be sealed with a cover (34).

4. The system according to claim 3, **characterized in that** a shaft (20) is rotatably mounted in a through opening in the cover (34), the shaft (20) protruding into the interior of the basic housing (1) and carrying a functional element (5) of the respective component, and that a connection piece (20a) of the shaft (20) protrudes outwardly from the cover (34).

5. The system according to claim 4, **characterized in that** the following items can be fitted to the cover (34) and connected to the connection piece (20a) by interlocking or force-transmitting means as required:
- a position-sensing module (18),
- a motorised-drive module (16),
- a manual-drive module (15),
- a control module (15a);
each module having a rotatable shaft section (35, 36, 39) and all modules (18, 16, 15) being adapted to be connected also to each other by interlocking or force-transmitting means by fitting their shaft sections together coaxially.

6. The system according to claim 4 or 5, **characterized in that** the functional element of the component (12, 13) is a spherical closing body (5) which is supported on a crank arm (32) connected to the shaft (20) and which cooperates with at least one sealing seat (4) inserted in one of the openings (2) in the lateral surfaces.

7. The system according to any of the preceding claims, **characterized in that** the openings (2) on the outside of the basic housing (1) are enlarged so that a sealing washer (6) can be accommodated.

## Revendications

1. Système modulaire de valve et de distribution pour des milieux fluides, constitué de plusieurs composants (11, 12, 13, 14) pouvant être assemblés les uns aux autres, dans lequel tous les composants (11, 12, 13, 14) présentent un boîtier de base (1) identique en forme de parallélépipède qui, sur des surfaces latérales opposées par paires, est pourvu d'ouvertures (2) de même configuration, et dans le cas de deux boîtiers de base (1) assemblés l'un à l'autre, leurs espaces intérieurs sont en liaison l'un avec l'autre par des ouvertures (2) correspondantes dans les surfaces latérales, les ouvertures (2) ménagées dans les surfaces latérales peuvent, en cas de besoin, être fermées par un couvercle d'obturation (7) ou être utilisées en tant qu'ouverture de raccordement, et le boîtier de base (1) peut être équipé, en cas de besoin, de parties fonctionnelles (4, 5, 8) des composants, un support (10a) faisant saillie dans l'espace intérieure du boîtier de base (1) étant fixé sur une pièce d'insert (10) montée dans une ouverture (2) pour une partie fonctionnelle (8) du composant (14) concerné, **caractérisé en ce que** sur le support (10a), un corps de fermeture à soupape (8) commandé par ressort est monté de manière à pouvoir être déplacé le long de l'axe commun à deux ouvertures (2) opposées des surfaces latérales du boîtier de base (1) et le corps de fermeture de soupape (8) coopère avec un siège d'étanchéité inséré dans l'ouverture (2) opposée.

2. Système selon la revendication 1, **caractérisé en ce que** le boîtier de base (1) présente une projection horizontale quadratique et plusieurs boîtiers de base (1) peuvent se succéder dans deux directions perpendiculaires l'une par rapport à l'autre.

3. Système selon l'une des revendications précédentes, **caractérisé en ce que** le boîtier de base (1) présentant un fond fermé et une surface supérieure ouverte qui peut être fermée par un couvercle (34).

4. Système selon la revendication 3, **caractérisé en ce que** dans une ouverture de passage du couvercle (34), un arbre (20) étant monté de manière pivotante en faisant saillie dans l'espace intérieur du boîtier de base (1) et portant une partie fonctionnelle (5) des composants concernés, et **en ce que** l'arbre (20) fait saillie avec une pièce de raccordement (20a) hors du couvercle (34) vers l'extérieur,

5. Système selon la revendication 4, **caractérisé en ce qu'**on peut placer sur le couvercle (34), en cas de besoin et par une liaison par coopération de formes ou de forces avec la pièce de raccordement (20a) :
- un module d'affichage de position (18),
- un module d'entraînement par moteur (16),
- un module d'entraînement manuel (15),
- un module de commande (15a) ;
chacun des modules présentant un tronçon d'arbre (35, 36, 39) pivotant, et tous les modules (18, 16, 15) pouvant aussi être reliés les uns aux autres par coopération de formes ou de forces, par l'enfichage coaxial de leurs tronçons d'arbre.

6. Système selon la revendication 4 ou 5, **caractérisé en ce que** la partie fonctionnelle des composants (12, 13) est un corps de fermeture (5) de forme sphérique qui est monté sur un bras de manivelle (32) relié à l'arbre (20) et qui coopère avec au moins un siège d'étanchéité (4) inséré dans une des ouvertures (2) des surfaces latérales.

7. Système selon l'une quelconque des revendications précédentes, **caractérisé en ce que** les ouvertures (2) sont élargies du côté extérieur du boîtier de base (1) pour recevoir une bague d'étanchéité (6).
